# EUROPEAN PATENT SPECIFICATION

(11) **EP 4 484 749 B1**
(45) Date of publication and mention of the grant of the patent: **17.12.2025**
(21) Application number: 23182691.8
(22) Date of filing: 30.06.2023
(51) Int. Cl.: F04B 39/10, F04B 49/22, F16K 3/04, F16K 3/06, F16K 1/22, F16K 31/163, F16K 31/52

(54) **AN ACTUATOR ARRANGEMENT FOR AN INLET AIR VALVE OF A COMPRESSOR, AN INLET AIR VALVE, AND A MINING MACHINE**
AKTUATORANORDNUNG FÜR EIN EINLASSLUFTVENTIL EINES VERDICHTERS, EINLASSLUFTVENTIL UND BERGBAUMASCHINE
AGENCEMENT D'ACTIONNEUR POUR UNE SOUPAPE D'AIR D'ENTRÉE D'UN COMPRESSEUR, SOUPAPE D'AIR D'ENTRÉE ET MACHINE D'EXPLOITATION MINIÈRE

(43) Date of publication of application: 01.01.2025
(73) Proprietor: Sandvik Mining and Construction Oy, 33330 Tampere (FI)
(72) Inventor: PARKKINEN, Pertti, 33311 Tampere (FI); VISKARI, Eero, 33311 Tampere (FI)
(74) Representative: Sandvik

(56) References cited:
- US-A- 2 600 499
- US-A- 2 991 002
- US-A- 3 317 179
- US-A- 4 134 619
- US-A1- 2002 108 659

## Description

### TECHNICAL FIELD

The embodiments disclosed herein relate to an actuator arrangement for an inlet air valve of a compressor of a mobile mining machine, an inlet valve, and a mobile mining machine.

### BACKGROUND

Various embodiments of mining machines are known. Some embodiments of mobile mining machines may include an air compressor system. The air compressor system may take air in through an air filter and compress the air with an air compressor and deliver the compressed air as working air, such as flushing air for a drilling rig operation.

The intake air may flow through an adjustable inlet air valve, which may be configured to control the amount of air that can flow through the adjustable inlet air valve. By adjusting the adjustable inlet air valve a controller of the compressor system of a mining machine may control the volume of compressed air delivered by the air compressor.

At some situations there is a need for reliable control the intake air valve to open progressively from a closed state to a fully open state.

### SUMMARY

According to a first aspect, there is provided an actuator arrangement for an inlet air valve of a compressor system of a mining machine.

According to an embodiment of the actuator arrangement for an inlet air valve the actuator arrangement comprises a linear actuator comprising a movable element, operatively connected via a lever mechanism to a shaft of a closing element of the inlet air valve, wherein a linear movement of the movable element of the linear actuator is transmitted via the lever mechanism to a rotation movement of the shaft of the closing element of the inlet air valve, wherein a transmission ratio of the lever mechanism is configured to vary during a movement of the movable element of the linear actuator. The lever mechanism comprises a first lever. The first lever comprises a first connecting point and a second connecting point. The first lever is connected in the first connecting point to the shaft of the closing element of the inlet air valve. The actuating arrangement further comprises a second lever. The second lever comprises a first connecting point and a second connecting point. The first connecting point of the second lever is connected to the first lever in the second connecting point. The second connecting point is arranged at a distance from the first connecting point. The second connecting point of the second lever is connected directly, or via a further lever, to the movable element. The linear movement of the movable element of the linear actuator is transmitted via the lever mechanism to a rotation movement of the shaft of the closing element. The distance between the connecting points of the second lever is adjustable. In an example embodiment of the actuator arrangement the second lever may be, for example, a turnbuckle type of a lever.

The technical effect of one or more embodiments is that by the actuator arrangement of the inlet air valve is suitable for different amount of working air needs, for example adaptable with use of different sized drill units, due to a progressive actuating arrangement of the closing element of the inlet air valve.

An advantage of the arrangement according to one or more embodiments of the present disclosure is that more stable control of the inlet air valve may be achieved with the actuator arrangement. This enables also more accurate control of the inlet air valve on relatively small flow channel opening values as adjusted with the closing element.

The actuator arrangement for an inlet valve is characterized by what is stated in the independent claim.

Some other embodiments are characterized by what is stated in the other claims.

Inventive embodiments are also disclosed in the specification and drawings of this patent application. The inventive content of the patent application may also be defined in other ways than defined in the following claims. The inventive content may also be formed of several separate inventions, especially if the invention is examined in the light of expressed or implicit subtasks or in view of obtained benefits or benefit groups. Some of the definitions contained in the following claims may then be unnecessary in view of the separate inventive ideas. Features of the different embodiments of the invention may, within the scope of the basic inventive idea, be applied to other embodiments.

In an example embodiment of the actuator arrangement a linear movement of the movable element of the linear actuator may be transmitted via the lever mechanism to a rotation movement of the shaft of the closing element of the inlet air valve. A transmission ratio of the lever mechanism may be configured to vary during a movement of the movable element of the linear actuator.

In an example embodiment of the actuator arrangement the movement of the linear actuator may be transmitted progressively via the lever mechanism to the closing element of the inlet air valve.

In an example embodiment of the actuator arrangement the shaft of the closing element of the inlet air valve may be rotatable by the lever mechanism at an angle (α) formed between a closing position, and a fully open position of the closing element.

In an example embodiment of the actuator arrangement the transmission ratio of the lever mechanism may be configurated to vary during the movement of the movable element of the linear actuator. In an example embodiment the transmission ratio may be a relative movement of the shaft of the closing element of the inlet air valve by a movement of the movable element of the linear actuator. In an example embodiment the transmission ratio may be an amount of rotation of the shaft of the closing element in relation to an amount of movement of the movable element of the linear actuator transmitted to the shaft of the closing element by the lever mechanism. In an example embodiment the transmission ratio of the lever mechanism may be configurated to vary during the movement of the movable element of the linear actuator so that in the beginning of the movement of the closing element from the closing position of the closing element towards fully open position of the closing element the transmission ratio of the lever mechanism may be low. In an example embodiment the transmission ratio of the lever mechanism may be configurated to vary during the movement of the movable element of the linear actuator so that in the beginning of the movement of the closing element from the closing position of the closing element towards fully open position of the closing element the transmission ratio of the lever mechanism may be low so that a movement speed of the closing element may have a first, slow, speed. In an example embodiment the transmission ratio of the lever mechanism may be configurated to vary during the movement of the movable element of the linear actuator so that the transmission ratio of the lever mechanism may be configured to increase so that the speed of the movement of the closing element may increase during movement of the closing element towards the fully open position.

In an example embodiment of the actuator arrangement the rotation of the shaft of the closing element may be configured to change non-linearly by the lever mechanism in relation to the movement of the movable element of the linear actuator.

In an example embodiment of the actuator arrangement the linear actuator may be fastened on a frame portion through which a shaft of the closing member may extend, and that the lever mechanism may be arranged on a side of the frame portion that may a side away from a flow channel.

In an example embodiment of the actuator arrangement the lever mechanism may comprise a third lever arranged between the second lever and the movable element of the linear actuator.

In an example embodiment of the actuator arrangement the third lever may be connected in a first connection point to a second connecting point of the second lever and in a second connection point to the movable element of the linear actuator, wherein the second connecting point may be at a distance from the first connecting point.

In an example embodiment of the actuator arrangement a fourth lever may be arranged to connect the third lever to a frame portion, wherein a first connecting point of the fourth lever may be connected to the frame portion, and a second connecting point of the fourth lever may be connected to the third lever between the first connecting point and the second connecting point, wherein the lever mechanism may be a four link mechanism.

In an example embodiment of the actuator arrangement a connection point between the first lever and the second lever may be a movable point in relation to the position of the second connecting point of the first lever. In an example embodiment of the actuator arrangement a connection point between the first lever and the second lever may be a movable point for example, a roll arranged on a second end of the first lever and arranged to move on a path formed on the second lever in relation to the position of the second connecting point of the first lever.

In an example embodiment of the actuator arrangement the linear actuator may be a hydraulic actuator or a pneumatic actuator or an electric actuator or an electro-hydraulic actuator, and may comprise a cylinder and a piston, and a bias element arranged in the actuator for assisting to return the movable element of the linear actuator and the valve element to a closing position.

According to a second aspect, there is provided an inlet air valve. According to an example embodiment the inlet air valve may comprise a valve body, a flow channel through the valve body, a closing element arranged in the flow channel. Said closing element may be arranged movably in the flow channel between at least two positions, a first, closing position, in which the flow channel may be closed, and a second, open position, in which air may flow through the channel. The inlet air valve may comprise an actuator arrangement according to one or more embodiments mentioned above or below or a combination of one or more embodiments mentioned above or below. In an example embodiment of the inlet air valve may be configured to have an integrated design comprising an actuator arrangement and valve in a same assembly.

According to a third aspect, there is provided a mining machine comprising at least one air compressor system for producing working air, such as flushing air for a drilling rig operation. According to an example embodiment, the mobile mining machine may be provided with the air compressor system of the mining machine may comprise an inlet air valve according to any one of embodiments mentioned above alone or combined with any other above embodiment or embodiments.

In the disclosure a meaning of word "closed" may also mean that some air may be able to flow in the flow channel despite that the closing element may be in a first, "closing" position.

### BRIEF DESCRIPTION OF THE DRAWINGS

The accompanying drawings, which are included to provide a further understanding of the embodiments and constitute a part of this specification together with the description help to explain the principles of the invention set out in the claims. In the drawings:
**Figure 1** is a simplified perspective view of an example embodiment of an inlet air valve with an example embodiment of an actuating arrangement,
**Figure 2** is a simplified side view of an example embodiment of the inlet air valve with an example embodiment of an actuating arrangement,
**Figure 3** is a simplified side view, of an example embodiment of the inlet air valve with an actuating arrangement, and partly cross-sectional view taken along a line U-U of Figure 2,
**Figure 4** is a simplified side view, of an example embodiment of the inlet air valve with an actuating arrangement, and partly cross-sectional view taken along a line A-A of Figure 3,
**Figure 5** is a simplified top view, of an example embodiment of the inlet air valve with an actuating arrangement, and partly cross-sectional view taken along a line B-B of Figure 3,
**Figure 6** is a simplified side view of an example embodiment of the inlet air valve with an example embodiment of an actuating arrangement in a first position, closing position,
**Figure 6a** is a simplified detail C of Figure 6,
**Figure 7** is a simplified side view of an example embodiment of the inlet air valve with example embodiment of an actuating arrangement in a second position, open position,
**Figure 7a** is a simplified detail D of Figure 7,
**Figure 8** is a simplified schematical figure of an example embodiment of an air compressor system of a mining machine, and
**Figure 9** is a diagram showing examples of opening curves of example embodiments of intake air valves.

In the figures, some embodiments are shown simplified for the sake of clarity. Similar parts are marked with the same reference numbers in the figures.

### DETAILED DESCRIPTION

According to an aspect, an actuator arrangement for an inlet valve for a compressor device described in this description may be arranged in a mobile mining machine. The machine may be a mine machine, or a construction machine, e.g., a rock drilling rig, a development drill, a tunneling drilling machine, a surface drilling machine, a bolting or reinforcing vehicle, a rock removal machine, a longhole drill rig, an explosive charging machine, a loader, a transport vehicle, a loading or hauling machine, a setting vehicle of gallery arcs or nets, a concrete spraying machine, a crusher, or a measuring vehicle.

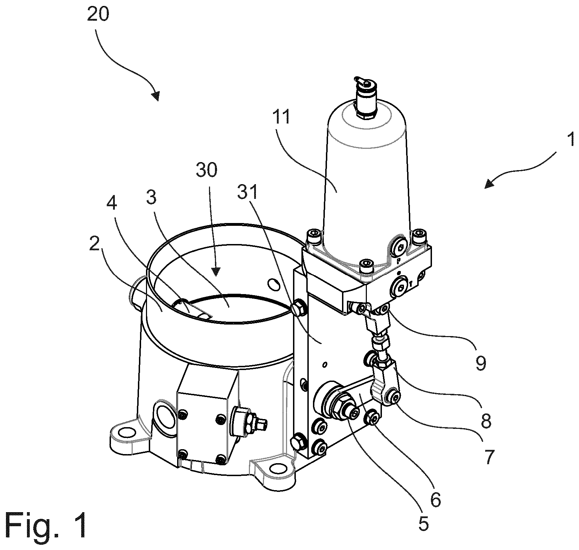

In figure 1 the inlet air valve 20 is for simplicity presented without a cover arrangement for the inlet air valve actuator arrangement.

The inlet air valve 20 may comprise a valve body 2. The inlet air valve 20 may comprise a flow channel 30 arranged through the valve body 2. The inlet air valve 20 may further comprise a closing element 3 arranged in the flow channel 30. The closing element 3 may be arranged movably in the flow channel 30 between at least two positions, a first, closing position, in which the flow channel 30 is closed, and a second, open position, in which air may flow through the channel. In an example embodiment the closing element 4 may be arranged on a shaft 4 that is arranged cross the flow channel 30 and extending through the wall of the flow channel. The inlet air valve 20 may comprise an actuator arrangement 1.

In an example embodiment the inlet air valve 20 may be an adjustable inlet air valve. In an example embodiment the inlet air valve 20 may be an inlet butterfly valve, comprising a disc-like closing element 3. The inlet air valve 20 may be biased by a spring to be in a default state of closed. The actuator arrangement 1 may be disposed to adjust the inlet air valve to open an adjustable amount to change an amount of air that can flow to the air inlet of the air compressor. In example embodiments the inlet air valve 20 may be operated by an electrical, hydraulic, or pneumatic actuator arrangement in communication with the controller. In example embodiments the actuator arrangement 1 may be in electrical communication with the controller. In an example embodiment the compressor system may comprise a pressure sensor 27. The pressure sensor may be a transducer for converting pressure into an electrical signal. The pressure sensor may be in electrical communication with the controller. The pressure sensor may be located in or near the air compressor. The engine may be an electric engine or a gasoline motor or a hydraulic motor. The air compressor may be a screw air compressor. The air inlet of the air compressor may be an air inlet of the air compressor. The air outlet of the air compressor may be an air outlet of the air compressor. The controller 50 may be a programmable logic controller (PLC). The controller may be in electrical communication with the actuator 21 of the inlet air valve 20. In an example embodiment the actuator arrangement 1 may be the actuator or part of the actuator. The controller 50 may be in electrical communication with the sensors. The controller 50 may be configured to control the operation of the air compressor system.

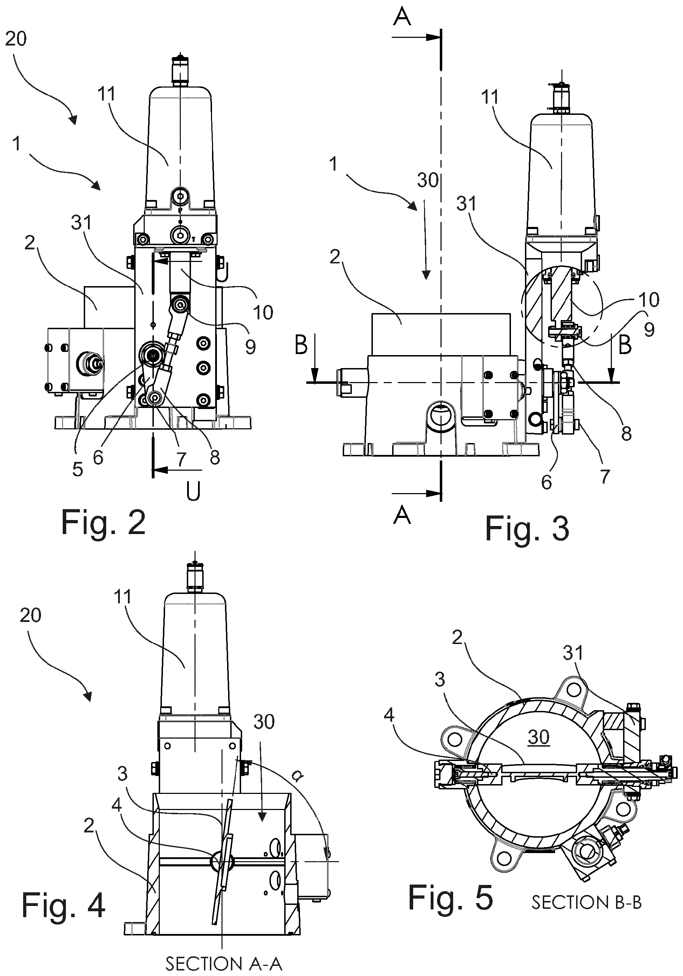

Figures 1 to 5 illustrates an example embodiment of the inlet air valve 20 comprising an actuator arrangement 1 for an inlet air valve. In an example embodiment the inlet air valve may be a type of a butterfly valve. The closing means may be arranged on a shaft 4 that may be arranged rotatably on a valve body cross the flow channel 30. An end of the shaft 4 may extend through a wall of the valve body defining the flow channel 30. The actuator arrangement 1 may comprise a linear actuator 11 comprising a movable element 10. The movable element 10 of the linear actuator 11 may be operatively connected via a lever mechanism 6, 7, 8, 9 to the shaft 4 of the closing element 3 of the inlet air valve. A linear movement of the movable element 10 of the linear actuator 11 may be transmitted via the lever mechanism 6, 7, 8, 9 to a rotation movement of the shaft 4 of the closing element 3 of the inlet air valve. In an example embodiment a transmission ratio of the lever mechanism is configured to vary during a movement of the movable element 10 of the linear actuator 11. In an example embodiment of figure 1 the inlet air valve is in a closed state. In an example embodiment of figures 2 to 5 the inlet air valve is in an open state.

In an example embodiment the shaft 4 of the closing element 3 of the inlet air valve is rotatable by the lever mechanism 6, 7, 8, 9 at an angle (α) formed between a closing position, and a fully open position of the closing element 3.

In an example embodiment the lever mechanism 6, 7, 8, 9; 6, 7, 8, 9 comprises a first lever 6. The first lever may comprise a first connecting point 5 and a second connecting point 7. The first lever 6 may be connected in the first connecting point 5 to the shaft 4 of the closing element 3 of the inlet air valve. The actuating arrangement may further comprise a second lever 8, comprising a first connecting point and a second connecting point. The first connecting point of the second lever 8 may be pivotally connected to the first lever 6 in the second connecting point 7 arranged at a distance from the first connection point 5. The second connecting point 9 of the second lever 8 may be pivotally connected directly or via a further lever, to the movable element 10. The linear movement of the movable element 10 of the linear actuator 11 may be transmitted via the lever mechanism 6, 7, 8, 9 to rotation movement of the shaft 4 of the closing element 3.

In an example embodiment a distance between the connecting points 7, 9 of the second lever 8 may be adjustable. The second lever 8 may be, for example, a turnbuckle type of a lever.

The movement of the movable element 10 of the movable element 10 of the linear actuator 11 may be transmitted progressively via the lever mechanism 6, 7, 8, 9 to the shaft 4 of the closing element (3) of the inlet air valve.

In an example embodiment the linear actuator 11 may be fastened on a frame portion 31 through which the shaft 4 of the closing element 3 is extending. The lever mechanism 6, 7, 8, 9 may be arranged on a side of the frame portion 31 that is away from the flow channel 30.

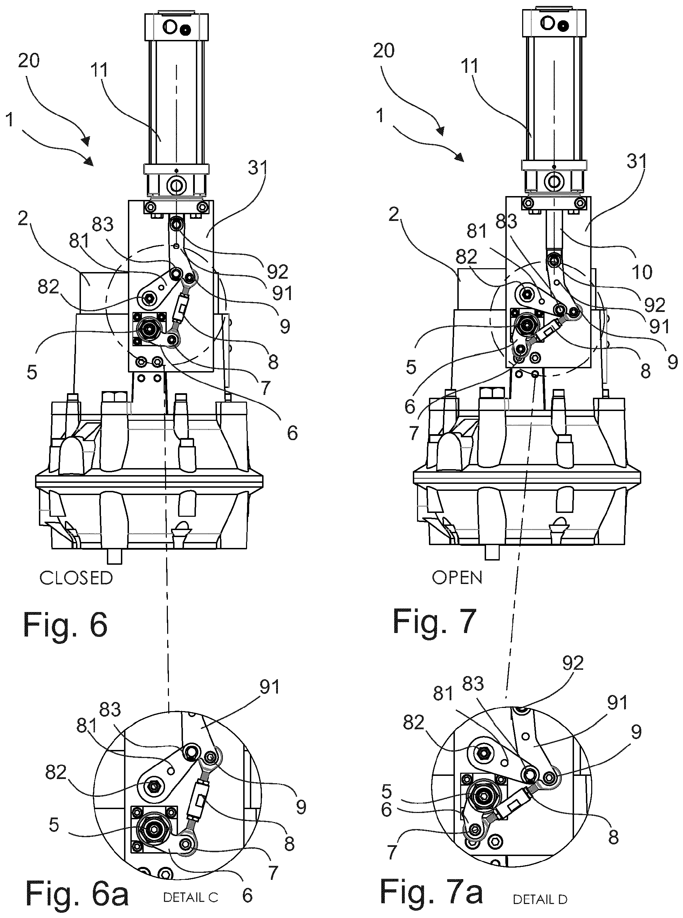

In an example embodiment of figures 6, 6a, 7, 7a the lever mechanism 6, 7, 8, 9, 91, 92 may comprise a third lever 91 arranged between the second lever 8 and the movable element 10 of the linear actuator 11.

The third lever 91 may be pivotally connected in a first connection point to a second connecting point 9 of the second lever 8 and pivotally connected in a second connection point to the movable element 10 of the linear actuator 11. The second connecting point may be at a distance from the first connecting point.

In an example embodiment a fourth lever 81 may be arranged to connect the third lever 91 to a frame portion 31, wherein a first connecting point of the fourth lever 81 is pivotally connected to the frame 31, and a second connecting point of the fourth lever 81 is connected to the third lever 91 between the first connecting point and the second connecting point. In an example embodiment the lever mechanism is a four link mechanism.

In an example embodiment a connection point between the first lever 6 and the second lever 8 may be a movable point in relation to the position of the second connecting point of the first lever. In an example embodiment the movable point may be a roll arranged on a second end of the first lever and arranged to move on a path formed on the second lever.

In an example embodiment the linear actuator 11 may be a hydraulic actuator or a pneumatic actuator or an electric actuator or an electro-hydraulic actuator, comprising a cylinder and a piston, and a bias element arranged in the actuator for assisting to return the movable element of the linear actuator and the valve element to a closing position.

The air flows through the filter, through the inlet air valve (when it is open), and into the air compressor. The inlet air valve may be in a default position of closed. A bias element (such as a spring, not illustrated) may hold the inlet air valve closed. The linear actuator 11 may be connected to the inlet air valve and the controller. The linear actuator may respond to current from the controller by extending the linear actuator. The movable element of the linear actuator pushes on the closing element of the inlet air valve which moves the inlet air valve to an open position. The inlet air valve may be adjustable so that the size of the opening of the inlet air valve is proportional to the amount the movable element 10 of the linear actuator 11 pushes on the closing element of the inlet air valve. In an example embodiment the movement of the movable element 10 of the linear actuator 11 may be transmitted progressively via the lever mechanism 6, 7, 8, 9; 6, 7, 8, 9, 91, 92 to the shaft 4 of the closing element 3 of the inlet air valve.

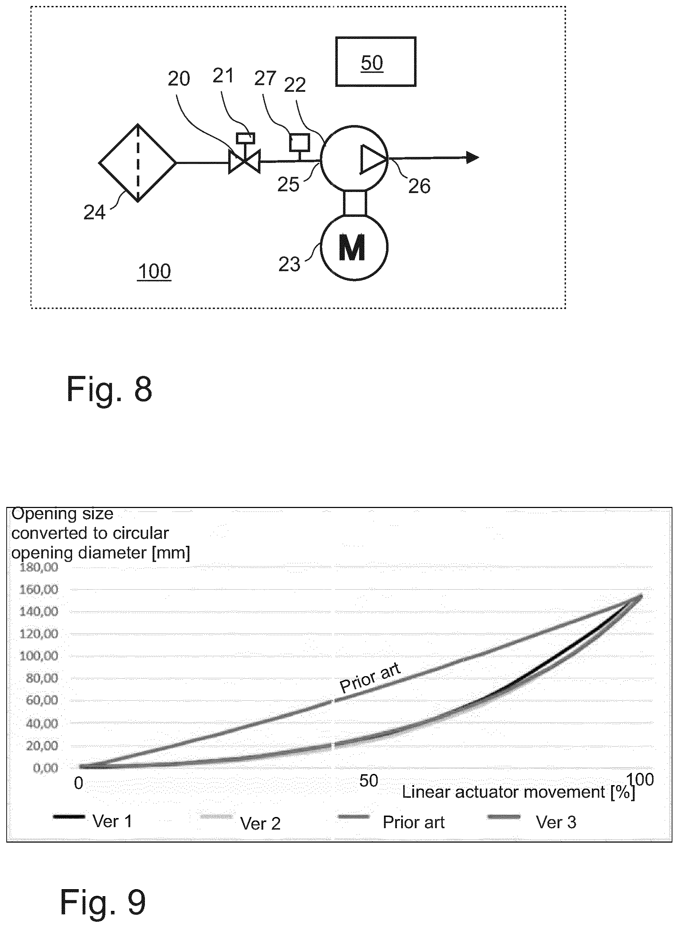

Figure 8 shows an example embodiment of an air compressor system of a mining machine 100. Air flows through the air filter 24 and is filtered by the air filter. The air flows through the inlet air valve 20, which may be configured to control the amount of air that can flow through the adjustable inlet air valve 20. The controller 50 may control how open the adjustable inlet air valve 20 is by providing signal or impulse the actuator arrangement 21. By adjusting the adjustable inlet air valve 20 the controller 50 can control the volume of compressed air delivered by the air compressor 22. This may be called throttling the air compressor system by controlling the opening of the adjustable inlet air valve 20.

The air that flows through the adjustable inlet air valve 20 flows into the air inlet 25 of the air compressor 22 and is compressed by the air compressor, which delivers a volume of compressed air to the air outlet 26 of the air compressor. The air compressor 22 may be driven by the engine 23. In an example embodiment the air compressor system may be a part of mobile mining machine 100.

Figure 9 is a diagram showing examples of opening curves of example embodiments of intake air valves. In the figure 9 is presented on a vertical axis (Y-axis) a size of an opening of a flow channel converted to circular openings having different diameters in mm. In an example embodiment the flow channel may have a nominal diameter of 150 mm. In an example embodiment a flow area (or a size of an opening of a flow channel) may be converted to circular opening diameters, in figure from 0 mm to 150 mm. On a horizontal axis (X-axis) is presented movement of a moving element of a linear actuator in percentages, 0% to 100%. The percentage is 0% when the moving element is a first position. The percentage increases according to the movement of the movable element of the linear actuator. The percentage is 100% when the moving element is a second position, i.e. in an extended position.

When the percentage of movement of the moving element of the linear actuator increases the opening of the flow channel becomes larger due the movement of the linear actuator transmitted by the lever mechanism to the closing element from closing position towards fully open position of the inlet air valve.

In the prior art version (Prior art) the opening curve seems to be linear. In exemplary embodiments of the different inlet air valve versions (Ver1, Ver2, Ver3) with different actuator arrangements the opening curves seem to be clearly non-linear. Ver1 may be an exemplary embodiment of an inlet air valve as shown in figure 1. Ver2 may be an exemplary embodiment of an inlet air valve as shown in figure 6. Ver3 may be an exemplary embodiment of an inlet air valve comprising an actuator arrangement in which a connection point between the first lever and the second lever may be a movable point in relation to the position of the second connecting point of the first lever. In an example embodiment the movable point may be a roll arranged on a second end of the first lever and arranged to move on a path formed on the second lever. In an exemplary embodiments of each of exemplary embodiments Ver1, Ver2, or Ver3 the movement of the closing member of the inlet air valve may be slow in the beginning of movement of the closing member from a closing position towards a fully open position. This may enable an accurate control of inlet air valve, also at small flow channel opening values.

In an example embodiment the frame portion 31 may be a plate like element, with an upper wall and a lower wall and a side wall connecting the upper wall to the lower wall. In an example embodiment of the inlet air valve may be configured to have an integrated design comprising an actuator arrangement and valve in a same assembly.

In an example embodiment of a mobile mining machine 100 may comprise at least one at least one air compressor system for producing working air, such as flushing air for a drilling rig operation, wherein the air compressor system of the mining machine comprises an inlet air valve 20 according.

It is obvious to a person skilled in the art that with the advancement of technology, the basic idea of the invention may be implemented in various ways. The invention is defined by the respective subject-matter of the appended patent claims.

## Claims

1. An actuator arrangement (1) for an inlet air valve of a compressor system of a mining machine, the actuator arrangement comprises a linear actuator (11) comprising a movable element (10), operatively connected via a lever mechanism (6, 7, 8, 9; 6, 7, 8, 9, 91, 92) to a shaft (4) of a closing element (3) of the inlet air valve arranged in a flow channel (30), wherein a linear movement of the movable element (10) of the linear actuator (11) is transmitted via the lever mechanism to a rotation movement of the shaft (4) of the closing element (3) of the inlet air valve, wherein a transmission ratio of the lever mechanism is configured to vary during a movement of the movable element (10) of the linear actuator (11), and wherein the lever mechanism (6, 7, 8, 9; 6, 7, 8, 9, 91, 92) comprises a first lever (6), comprising a first connecting point (5) and a second connecting point (7), wherein the first lever (6) is connected in the first connecting point (5) to the shaft (4) of the closing element (3) of the inlet air valve, and the actuating arrangement further comprises a second lever (8), comprising a first connecting point and a second connecting point, wherein the first connecting point of the second lever (8) is pivotally connected to the first lever in the second connecting point (7) arranged at a distance from the first connection point (5), wherein the second connecting point (9) of the second lever (8) is pivotally connected directly or via a further lever, to the movable element (10), wherein linear movement of the movable element (10) of the linear actuator is transmitted via the lever mechanism (6, 7, 8, 9; 6, 7, 8, 9, 91, 92) to rotation movement of the shaft (4) of the closing element (3), **characterized in that**
a distance between the connecting points (7, 9) of the second lever (8) is adjustable.

2. The arrangement according to claim 1, wherein the movement of the movable element (10) of the linear actuator (11) is transmitted progressively via the lever mechanism (6, 7, 8, 9; 6, 7, 8, 9, 91, 92) to the shaft (4) of the closing element (3) of the inlet air valve.

3. The arrangement according to claim 1 or 2, wherein the shaft (4) of the closing element (3) of the inlet air valve is rotatable by the lever mechanism (6, 7, 8, 9; 6, 7, 8, 9, 91, 92) at an angle (α) formed between a closing position, and a fully open position of the closing element (3).

4. The arrangement according to any one of claims 1 to 3, wherein the transmission ratio of the lever mechanism (6, 7, 8, 9; 6, 7, 8, 9, 91, 92) is configurated to vary during the movement of the movable element (10) of the linear actuator (11) so that in the beginning of the movement of the closing element from the closing position of the closing element (3) towards fully open position of the closing element the transmission ratio of the lever mechanism is low so that a movement speed of the closing element (3) has a first, slow, speed, and wherein the transmission ratio of the lever mechanism is configured to increase so that the speed of the movement of the closing element (3) increases during movement of the closing element towards the fully open position.

5. The arrangement according to any one of claims 1 to 4, wherein the rotation of the shaft (4) of the closing element (3) is configured to change non-linearly by the lever mechanism (6, 7, 8, 9; 6, 7, 8, 9, 91, 92) in relation to the movement of the movable element (10) of the linear actuator (11).

6. The arrangement according to any one of claims 1 to 5, wherein the linear actuator (11) is fastened on a frame portion (31) through which the shaft (4) of the closing element (3) is extending, and that the lever mechanism (6, 7, 8, 9; 6, 7, 8, 9, 91, 92) is arranged on a side of the frame portion (31) that is away from the flow channel (30).

7. The arrangement according to any one of claims 1 to 6, wherein the second lever is a turnbuckle type of a lever.

8. The arrangement according to any one of claims 1 to 7, wherein the lever mechanism (6, 7, 8, 9; 6, 7, 8, 9, 91, 92) comprises a third lever (91) arranged between the second lever (8) and the movable element (10) of the linear actuator (11).

9. The arrangement according to claim 8, wherein the third lever (91) is pivotally connected in a first connection point to a second connecting point (9) of the second lever (8) and pivotally connected in a second connection point to the movable element (10) of the linear actuator (11), wherein the second connecting point is at a distance from the first connecting point.

10. The arrangement according to claim 8 or 9, wherein a fourth lever (81) is arranged to connect the third lever (91) to a frame portion (31), wherein a first connecting point of the fourth lever (81) is pivotally connected to the frame (31), and a second connecting point of the fourth lever (81) is connected to the third lever between the first connecting point and the second connecting point, wherein the lever mechanism is a four link mechanism.

11. The arrangement according to any one of claims 1 to 10, wherein a connection point between the first lever (6) and the second lever (8) is a movable point in relation to the position of the second connecting point of the first lever.

12. The arrangement according to any one of claims 1 to 11, wherein the linear actuator (11) is a hydraulic actuator or a pneumatic actuator or an electric actuator or an electro-hydraulic actuator, comprising a cylinder and a piston, and a bias element arranged in the actuator for assisting to return the movable element of the linear actuator and the valve element to a closing position.

13. An inlet air valve (20) comprising a valve body (2), a flow channel (30) through the valve body, a closing element (3) arranged in the flow channel, said closing element is arranged movably in the flow channel between at least two positions, a first, closing position, in which the flow channel (30) is closed, and a second, open position, in which air may flow through the channel, wherein the inlet air valve comprises a actuator arrangement (1) according to any one of claims 1 to 12.

14. A mining machine (100) comprising at least one air compressor system for producing working air, such as flushing air for a drilling rig operation, wherein the air compressor system of the mining machine comprises an inlet air valve (20) according to claim 13.

## Patentansprüche

1. Betätigungsvorrichtungsanordnung (1) für ein Ansaugluftventil eines Kompressorsystems einer Abbaumaschine, wobei die Betätigungsvorrichtungsanordnung eine lineare Betätigungsvorrichtung (11) umfasst, die ein bewegbares Element (10) umfasst, das über einen Hebelmechanismus (6, 7, 8, 9; 6, 7, 8, 9, 91, 92) funktional mit einer Welle (4) eines Schließelements (3) des Ansaugluftventils verbunden ist, das in einem Strömungskanal (30) angeordnet ist, wobei eine Linearbewegung des bewegbaren Elements (10) der linearen Betätigungsvorrichtung (11) über den Hebelmechanismus in eine Drehbewegung der Welle (4) des Schließelements (3) des Ansaugluftventils umgewandelt wird, wobei ein Übersetzungsverhältnis des Hebelmechanismus konfiguriert ist, sich während einer Bewegung des bewegbaren Elements (10) der linearen Betätigungsvorrichtung (11) zu ändern, und wobei der Hebelmechanismus (6, 7, 8, 9; 6, 7, 8, 9, 91, 92) einen ersten Hebel (6) umfasst, der einen ersten Verbindungspunkt (5) und einen zweiten Verbindungspunkt (7) umfasst, wobei der erste Hebel (6) im ersten Verbindungspunkt (5) mit der Welle (4) des Schließelements (3) des Ansaugluftventils verbunden ist, und die Betätigungsanordnung weiter einen zweiten Hebel (8) umfasst, der einen ersten Verbindungspunkt und einen zweiten Verbindungspunkt umfasst, wobei der erste Verbindungspunkt des zweiten Hebels (8) schwenkbar mit dem ersten Hebel im zweiten Verbindungspunkt (7) verbunden ist, der in einem Abstand vom ersten Verbindungspunkt (5) angeordnet ist, wobei der zweite Verbindungspunkt (9) des zweiten Hebels (8) schwenkbar direkt oder über einen weiteren Hebel mit dem bewegbaren Element (10) verbunden ist, wobei die Linearbewegung des bewegbaren Elements (10) der linearen Betätigungsvorrichtung über den Hebelmechanismus (6, 7, 8, 9; 6, 7, 8, 9, 91, 92) in eine Drehbewegung der Welle (4) des Schließelements (3) umgewandelt wird, **dadurch gekennzeichnet, dass**
ein Abstand zwischen den Verbindungspunkten (7, 9) des zweiten Hebels (8) einstellbar ist.

2. Anordnung nach Anspruch 1, wobei die Bewegung des bewegbaren Elements (10) der linearen Betätigungsvorrichtung (11) progressiv über den Hebelmechanismus (6, 7, 8, 9; 6, 7, 8, 9, 91, 92) auf die Welle (4) des Schließelements (3) des Ansaugluftventils übertragen wird.

3. Anordnung nach Anspruch 1 oder 2, wobei die Welle (4) des Schließelements (3) des Ansaugluftventils durch den Hebelmechanismus (6, 7, 8, 9; 6, 7, 8, 9, 91, 92) um einen Winkel (α) drehbar ist, der zwischen einer Schließposition und einer vollständig geöffneten Position des Schließelements (3) aufgespannt wird.

4. Anordnung nach einem der Ansprüche 1 bis 3, wobei das Übersetzungsverhältnis des Hebelmechanismus (6, 7, 8, 9; 6, 7, 8, 9, 91, 92) konfiguriert ist, sich während der Bewegung des bewegbaren Elements (10) der linearen Betätigungsvorrichtung (11) derart zu ändern, dass zu Beginn der Bewegung des Schließelements aus der Schließposition des Schließelements (3) in Richtung der vollständig geöffneten Position des Schließelements das Übersetzungsverhältnis des Hebelmechanismus niedrig ist, so dass eine Bewegungsgeschwindigkeit des Schließelements (3) eine erste, langsame Geschwindigkeit aufweist, und wobei das Übersetzungsverhältnis des Hebelmechanismus konfiguriert ist, anzusteigen, so dass die Geschwindigkeit der Bewegung des Schließelements (3) während der Bewegung des Schließelements in Richtung der vollständig geöffneten Position zunimmt.

5. Anordnung nach einem der Ansprüche 1 bis 4, wobei die Drehung der Welle (4) des Schließelements (3) durch den Hebelmechanismus (6, 7, 8, 9; 6, 7, 8, 9, 91, 92) nichtlinear in Bezug auf die Bewegung des bewegbaren Elements (10) der linearen Betätigungsvorrichtung (11) konfiguriert ist.

6. Anordnung nach einem der Ansprüche 1 bis 5, wobei die lineare Betätigungsvorrichtung (11) an einem Rahmenteil (31) befestigt ist, durch das sich die Welle (4) des Schließelements (3) erstreckt, und dass der Hebelmechanismus (6, 7, 8, 9; 6, 7, 8, 9, 91, 92) auf einer Seite des Rahmenteils (31) angeordnet ist, die von dem Strömungskanal (30) abgewandt ist.

7. Anordnung nach einem der Ansprüche 1 bis 6, wobei der zweite Hebel ein Hebel vom Spannschlosstyp ist.

8. Anordnung nach einem der Ansprüche 1 bis 7, wobei der Hebelmechanismus (6, 7, 8, 9; 6, 7, 8, 9, 91, 92) einen dritten Hebel (91) umfasst, der zwischen dem zweiten Hebel (8) und dem beweglichen Element (10) der linearen Betätigungsvorrichtung (11) angeordnet ist.

9. Anordnung nach Anspruch 8, wobei der dritte Hebel (91) in einem ersten Verbindungspunkt schwenkbar mit einem zweiten Verbindungspunkt (9) des zweiten Hebels (8) verbunden ist und in einem zweiten Verbindungspunkt schwenkbar mit dem beweglichen Element (10) der linearen Betätigungsvorrichtung (11) verbunden ist, wobei der zweite Verbindungspunkt einen Abstand vom ersten Verbindungspunkt aufweist.

10. Anordnung nach Anspruch 8 oder 9, wobei ein vierter Hebel (81) so angeordnet ist, dass er den dritten Hebel (91) mit einem Rahmenteil (31) verbindet, wobei ein erster Verbindungspunkt des vierten Hebels (81) schwenkbar mit dem Rahmen (31) verbunden ist und ein zweiter Verbindungspunkt des vierten Hebels (81) zwischen dem ersten Verbindungspunkt und dem zweiten Verbindungspunkt mit dem dritten Hebel verbunden ist, wobei der Hebelmechanismus ein Viergelenkmechanismus ist.

11. Anordnung nach einem der Ansprüche 1 bis 10, wobei ein Verbindungspunkt zwischen dem ersten Hebel (6) und dem zweiten Hebel (8) ein beweglicher Punkt in Bezug auf die Position des zweiten Verbindungspunkts des ersten Hebels ist.

12. Anordnung nach einem der Ansprüche 1 bis 11, wobei die lineare Betätigungsvorrichtung (11) eine hydraulische Betätigungsvorrichtung oder eine pneumatische Betätigungsvorrichtung oder eine elektrische Betätigungsvorrichtung oder eine elektrohydraulische Betätigungsvorrichtung ist, die einen Zylinder und einen Kolben umfasst, sowie ein Vorspannelement, das in der Betätigungsvorrichtung angeordnet ist, um die Rückführung des bewegbaren Elements der linearen Betätigungsvorrichtung und des Ventilelements in eine Schließposition zu unterstützen.

13. Ansaugluftventil (20), umfassend einen Ventilkörper (2), einen Strömungskanal (30) durch den Ventilkörper, ein in dem Strömungskanal angeordnetes Schließelement (3), wobei das Schließelement im Strömungskanal zwischen mindestens zwei Positionen beweglich angeordnet ist, einer ersten, Schließposition, in der der Strömungskanal (30) geschlossen ist, und einer zweiten, offenen Position, in der Luft durch den Kanal strömen kann, wobei das Ansaugluftventil eine Betätigungsvorrichtungsanordnung (1) nach einem der Ansprüche 1 bis 12 umfasst.

14. Abbaumaschine (100), umfassend mindestens ein Druckluftsystem zur Erzeugung von Druckluft, wie z. B. Spülluft für einen Bohrbetrieb, wobei das Druckluftsystem der Abbaumaschine ein Ansaugluftventil (20) nach Anspruch 13 umfasst.

## Revendications

1. Agencement d'actionneur (1) pour une soupape d'admission d'air d'un système de compresseur d'une machine d'exploitation minière, l'agencement d'actionneur comprend un actionneur linéaire (11) comprenant un élément mobile (10), relié de manière fonctionnelle via un mécanisme de levier (6, 7, 8, 9 ; 6, 7, 8, 9, 91, 92) à un arbre (4) d'un élément de fermeture (3) de la soupape d'admission d'air disposé dans un canal d'écoulement (30), dans lequel un mouvement linéaire de l'élément mobile (10) de l'actionneur linéaire (11) est transmis via le mécanisme de levier à un mouvement de rotation de l'arbre (4) de l'élément de fermeture (3) de la soupape d'admission d'air, dans lequel un rapport de transmission du mécanisme de levier est configuré pour varier pendant un mouvement de l'élément mobile (10) de l'actionneur linéaire (11), et dans lequel le mécanisme de levier (6, 7, 8, 9 ; 6, 7, 8, 9, 91, 92) comprend un premier levier (6) comprenant un premier point de liaison (5) et d'un second point de liaison (7), dans lequel le premier levier (6) est relié, au niveau du premier point de liaison (5), à l'arbre (4) de l'élément de fermeture (3) de la soupape d'admission d'air et l'agencement d'actionnement comprend en outre un deuxième levier (8) comprenant un premier point de liaison et un second point de liaison, dans lequel le premier point de liaison du deuxième levier (8) est relié de manière pivotante au premier levier au niveau du second point de liaison (7) agencé à distance du premier point de liaison (5), dans lequel le second point de liaison (9) du deuxième levier (8) est relié de manière pivotante, directement ou par l'intermédiaire d'un autre levier, à l'élément mobile (10), dans lequel le mouvement linéaire de l'élément mobile (10) de l'actionneur linéaire est transmis par le mécanisme de levier (6, 7, 8, 9 ; 6, 7, 8, 9, 91, 92) au mouvement de rotation de l'arbre (4) de l'élément de fermeture (3), **caractérisé en ce que**
une distance entre les points de liaison (7, 9) du deuxième levier (8) est réglable.

2. Agencement selon la revendication 1, dans lequel le mouvement de l'élément mobile (10) de l'actionneur linéaire (11) est transmis progressivement via le mécanisme de levier (6, 7, 8, 9 ; 6, 7, 8, 9, 91, 92) à l'arbre (4) de l'élément de fermeture (3) de la soupape d'admission d'air.

3. Agencement selon la revendication 1 ou 2, dans lequel l'arbre (4) de l'élément de fermeture (3) de la soupape d'admission d'air peut être tourné par le mécanisme de levier (6, 7, 8, 9 ; 6, 7, 8, 9, 91, 92) à un angle (α) formé entre une position de fermeture et une position complètement ouverte de l'élément de fermeture (3).

4. Agencement selon l'une quelconque des revendications 1 à 3, dans lequel le rapport de transmission du mécanisme de levier (6, 7, 8, 9 ; 6, 7, 8, 9, 91, 92) est configuré pour varier pendant le mouvement de l'élément mobile (10) de l'actionneur linéaire (11) de telle sorte qu'au début du mouvement de l'élément de fermeture de la position de fermeture de l'élément de fermeture (3) vers la position complètement ouverte de l'élément de fermeture, le rapport de transmission du mécanisme de levier soit faible de telle sorte qu'une vitesse de mouvement de l'élément de fermeture (3) présente une première vitesse lente, et dans lequel le rapport de transmission du mécanisme de levier est configuré pour augmenter de telle sorte que la vitesse du mouvement de l'élément de fermeture (3) augmente pendant le mouvement de l'élément de fermeture vers la position complètement ouverte.

5. Agencement selon l'une quelconque des revendications 1 à 4, dans lequel la rotation de l'arbre (4) de l'élément de fermeture (3) est configurée pour changer de manière non linéaire par le mécanisme de levier (6, 7, 8, 9 ; 6, 7, 8, 9, 91, 92) par rapport au mouvement de l'élément mobile (10) de l'actionneur linéaire (11).

6. Agencement selon l'une quelconque des revendications 1 à 5, dans lequel l'actionneur linéaire (11) est fixé sur une partie de cadre (31) à travers laquelle s'étend l'arbre (4) de l'élément de fermeture (3), et que le mécanisme de levier (6, 7, 8, 9 ; 6, 7, 8, 9, 91, 92) est agencé sur un côté de la partie de cadre (31) qui est éloigné du canal d'écoulement (30).

7. Agencement selon l'une quelconque des revendications 1 à 6, dans lequel le deuxième levier est un levier de type tendeur de câble.

8. Agencement selon l'une quelconque des revendications 1 à 7, dans lequel le mécanisme de levier (6, 7, 8, 9 ; 6, 7, 8, 9, 91, 92) comprend un troisième levier (91) agencé entre le deuxième levier (8) et l'élément mobile (10) de l'actionneur linéaire (11).

9. Agencement selon la revendication 8, dans lequel le troisième levier (91) est relié de manière pivotante en un premier point de liaison à un second point de liaison (9) du deuxième levier (8) et relié de manière pivotante en un second point de liaison à l'élément mobile (10) de l'actionneur linéaire (11), dans lequel le second point de liaison est à distance du premier point de liaison.

10. Agencement selon la revendication 8 ou 9, dans lequel un quatrième levier (81) est agencé pour relier le troisième levier (91) à une partie de cadre (31), dans lequel un premier point de liaison du quatrième levier (81) est relié de manière pivotante au cadre (31), et un second point de connexion du quatrième levier (81) est relié au troisième levier entre le premier point de connexion et le second point de connexion, dans lequel le mécanisme de levier est un mécanisme à quatre liaisons.

11. Agencement selon l'une quelconque des revendications 1 à 10, dans lequel un point de liaison entre le premier levier (6) et le deuxième levier (8) est un point mobile par rapport à la position du second point de liaison du premier levier.

12. Agencement selon l'une quelconque des revendications 1 à 11, dans lequel l'actionneur linéaire (11) est un actionneur hydraulique ou un actionneur pneumatique ou un actionneur électrique ou un actionneur électrohydraulique, comprenant un cylindre et un piston, et un élément de polarisation agencé dans l'actionneur pour aider à ramener l'élément mobile de l'actionneur linéaire et l'élément de soupape à une position de fermeture.

13. Soupape d'admission d'air (20) comprenant un corps de soupape (2), un canal d'écoulement (30) à travers le corps de soupape, un élément de fermeture (3) agencé dans le canal d'écoulement, ledit élément de fermeture est agencé de manière mobile dans le canal d'écoulement entre au moins deux positions, une première position de fermeture, dans laquelle le canal d'écoulement (30) est fermé, et une seconde position ouverte, dans laquelle l'air peut circuler à travers le canal, dans laquelle la soupape d'admission d'air comprend un agencement d'actionneur (1) selon l'une quelconque des revendications 1 à 12.

14. Machine d'exploitation minière (100) comprenant au moins un système de compresseur d'air pour produire de l'air de travail, tel que de l'air de rinçage pour une opération de forage, dans laquelle le système de compresseur d'air de la machine d'exploitation minière comprend une soupape d'air d'admission (20) selon la revendication 13.
